(19) Europäisches Patentamt
European Patent Office
Office européen des brevets

(11) **EP 3 000 331 B1**

(12) **EUROPÄISCHE PATENTSCHRIFT**

(45) Veröffentlichungstag und Bekanntmachung des Hinweises auf die Patenterteilung:
**08.03.2017 Patentblatt 2017/10**

(51) Int Cl.:
*A23L 3/3508* (2006.01)      *A23L 2/44* (2006.01)
*A23F 3/16* (2006.01)      *A23L 3/3535* (2006.01)
*A23L 3/3517* (2006.01)

(21) Anmeldenummer: **15183138.5**

(22) Anmeldetag: **31.08.2015**

(54) **VERFAHREN ZUR ENTKEIMUNG VON MIT ESSIGSÄUREBAKTERIEN BELASTETEN GETRÄNKEN**

METHOD FOR THE DISINFECTION OF DRINKS CONTAMINATED WITH ACETIC ACID BACTERIA

PROCEDE DE DESINFECTION DE BOISSONS CHARGES DE BACTERIES D'ACIDE ACETIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2014 EP 14186849**

(43) Veröffentlichungstag der Anmeldung:
**30.03.2016 Patentblatt 2016/13**

(73) Patentinhaber: **LANXESS Deutschland GmbH 50569 Köln (DE)**

(72) Erfinder: **TAUPP, Marcus 41539 Dormagen (DE)**

(56) Entgegenhaltungen:
**EP-A1- 2 298 088      WO-A1-96/09774**
**DE-A1-102006 035 202     DE-A1-102008 048 714**
**US-A- 6 136 356**

- **TERRELL F R ET AL: "Yeast inhibition in grape juice containing sulfur dioxide, sorbic acid, and dimethyldicarbonate", JOURNAL OF FOOD SCIENCE,, Bd. 58, Nr. 5, 1993, Seiten 1132-1134, XP002541344, WILEY-BLACKWELL PUBLISHING, INC, US ISSN: 0022-1147, DOI: 10.1111/J.1365-2621.1993.TB06131.X**
- **FISHER T L ET AL: "Survival of Escherichiacoli O157:H7 in apple cider as affected by dimethyl dicarbonate, sodium bisulfite, and sodium benzoate.", JOURNAL OF FOOD SCIENCE, Bd. 63, Nr. 5, 1998, Seiten 1-3, XP002736622, DOI: 10.1111/j.1365-2621.1998.tb17923.x**
- **I Horsáková ET AL: "Asaia sp. as a Bacterium Decaying the Packaged Still Fruit Beverages", Special Issue Czech J. Food Sci, 2009, XP055158546, Gefunden im Internet: URL:http://www.agriculturejournals.cz/publicFiles/07951.pdf [gefunden am 2014-12-15]**

**Beschreibung**

Die Erfindung betrifft ein Verfahren und die Verwendung von synergistisch wirkenden Mischungen zur Entkeimung und anschließender Konservierung von Getränken, die durch Essigsäurebakterien verunreinigt sind.

Getränke können durch Mikroorganismen kontaminiert werden, was letztlich zu Verderb und Unbrauchbarkeit des Produkts führt. Des Weiteren stellt eine mikrobielle Kontamination von Getränken ein Gesundheitsrisiko für den Anwender dar. Durch die Verwendung von chemischen Konservierungsstoffen wird ein Überleben oder ein Wachstum von Mikroorganismen in den Getränken verhindert. Vermehrt machen sich in Getränken Keime bemerkbar, die seit etwas mehr als zehn Jahren das erste mal als Getränkeschädlinge identifiziert wurden und zunehmend häufiger in Erscheinung treten. Hierbei handelt es sich um Bakterien, die zur Familie der Essigsäurebakterien und speziell zur Gattung *Asaia, Neoasaia, Acetobacter, Gluconobacter, Gluconacetobacter* oder ähnlich gehören (Yamada, Y. and Yukphan, P., Genera and species in acetic acid bacteria. International Journal of Food Microbiology, 125, 15-24, 2008). Vermehrt hat sich gezeigt dass Konservierungsmittel nicht ausreichend stark genug sind und somit sehr hohe Konzentrationen eingesetzt werden, um zu verhindern dass die genannten Bakterien sich vermehren können und somit das Getränk entsprechend kontaminieren (Horsakova, I., et al., Asaia sp. as a bacterium decaying the packaged still fruit beverages., Czech. Journal of Food Science, 27, 362-365, 2009). Der Einsatz von hohen Konzentrationen an Konservierungsmitteln ist aber aus ökonomischer Sicht unerwünscht und durch gesetzliche Regelungen limitiert.

Aus der WO 96/09774 ist ein Konservierungsmittel aus Kaliumsorbat und/oder Natriumbenzoat und Dimethyldicarbonat und Ascorbinsäure bekannt, das zur Entkeimung und Konservierung von Getränken geeignet ist. Nachteilig an diesem Konservierungsmittel ist weiterhin, dass es nicht effizient gegen Essigsäurebakterien wirkt.

Aus Watanabe und Ino, 1984 (Watanabe, M.L. and Ino S.; Studies on bacteria isolated from Japanese wine. Part 2. Growth of the Acetobacter sp. A-1 during the fermentation and storage of grape must and red wine. Yamanashiken Shokuhin Kogyo Shidosho Kenkyu Hokoku 16:13, 1984) sowie aus Juven, B.J. and Shomen, I., (Juven, B.J. and Shomen, I., Spoilage of soft drinks caused by bacterial flocculation. Journal of Food Protection, 48, 52, 1985), ist die Verwendung von Schwefeldioxid in hohen Konzentrationen für die Kontrolle des Wachstums von Essigsäurebakterien bekannt.

Nachteilig an diesem Verfahren ist ebenfalls, dass die Wirksamkeit nicht effizient genug ist und somit hohe Konzentrationen an Schwefeldioxid eingesetzt werden müssen, die den Geschmack des Getränkes häufig negativ beeinflussen und allergische Reaktionen hervorrufen können.

Es bestand daher weiterhin das Bedürfnis nach einem Verfahren zur Entkeimung von Getränken bei dem Essigsäurebakterien effizient entfernt werden und die Nachteile des Standes der Technik überwunden werden.

Es wurde überraschend gefunden, dass die erfindungsgemäß angewendete Mischung in synergistischer Weise gegen Essigsäurebakterien wirkt und Essigsäurebakterien effizient bekämpft werden.

Gegenstand der Erfindung ist daher die Verwendung von synergistisch wirkenden Mischungen enthaltend

a) Sorbinsäure oder Benzoesäure und/oder deren Alkali- und/oder Erdalkalimetallsalze und

b) Dimethyldicarbonat und

c) Schwefeldioxid und/oder Schwefeldioxid-freisetzende Substanzen

zur Entkeimung von Getränken, die durch Essigsäurebakterien verunreinigt sind, vorzugsweise zu deren anschließenden Konservierung.

Als Alkalimetallsalze der Sorbinsäure werden bevorzugt Natriumsorbat, Kaliumsorbat und Lithiumsorbat oder Mischungen dieser Salze eingesetzt werden. Als Erdalkalimetallsalze der Sorbinsäure werden bevorzugt Calciumsorbat oder Magnesiumsorbat oder Mischungen dieser Salze eingesetzt werden. Besonders bevorzugt wird Kaliumsorbat eingesetzt.

Als Alkalimetallsalze der Benzoesäure werden bevorzugt Natriumbenzoat, Kaliumbenzoat und Lithiumbenzoat oder Mischungen dieser Salze eingesetzt werden. Als Erdalkalimetallsalze der Benzoesäure werden bevorzugt Calciumbenzoat oder Magnesiumbenzoat oder Mischungen dieser Salze eingesetzt werden. Besonders bevorzugt wird Natriumbenzoat eingesetzt.

Weiterhin wird Schwefeldioxid oder/und Schwefeldioxid-freisetzende Substanzen wie, z.B. anorganische oder organische Schwefelverbindungen eingesetzt. Bevorzugt werden anorganischen Schwefelverbindungen eingesetzt. Besonders bevorzugt werden als Schwefeldioxid-freisetzende Substanzen Natriumhydrogensulfit, Natriumdisulfit, Kaliumhydrogensulfit, Kaliumdisulfit, Calciumhydrogensulfit, Calciumdisulfit, Kaliumdisulfit oder Mischungen dieser Salze eingesetzt werden. Ganz besonders bevorzugt wird als Schwefeldioxid-freisetzende Substanz Kaliumdisulfit eingesetzt.

Bakterien aus der Familie der Essigsäurebakterien sind im Allgemeinen Gram-negative, aerobe Stäbchen und dem Fachmann bekannt. Der Typ-Stamm dieser Bakterien ist *Acetobacter aceti* und mittlerweile sind vor allem im Bereich *Asaia sp.* neue Bakterien der Familie der Essigsäurenbakterien zugeordnet worden. Bevorzugt werden von der Mischung Essigsäurebakterien ausgewählt aus der folgende Gruppe Asaia sp., Acetobacter sp. Gluconobacter sp., Gluconacetobacter sp., Saccharibacter sp., Swaminanthia sp., Acidomonas sp., Kozakia sp., Neoasaia sp., Granulibacter sp., Acidocella sp., Acidiphilium sp., Roseococcus sp., Acidosphaera sp., Rhodopila sp. aus den Getränken entfernt. Besonders bevorzugt wirkt die Mischung gegen Asaia bogorensis, Asaia lannaensis, Gluconobacter oxydans und Gluconacetobacter liquefaciens.

Unter Getränken werden vorzugsweise Erfrischungsgetränke, wie z.B. und vorzugsweise Softdrinks, Fruchtsäfte und fruchtsafthaltige Getränke, aromatisierte Erfrischungsgetränke verstanden wie Limonaden, Tee (sogenannte ready-to-drink-Teegetränke), wie z.B. und vorzugsweise Eistee, Mischgetränke eines Tee/fruchtsafthaltigen Erfrischungsgetränkes, aber auch entsprechende Konzentrate, sowie Weincooler und entalkoholisierte Weine. Besonders bevorzugt sind die Getränke Eistees.

Die Sorbinsäure und/oder deren Alkali- und/oder Erdalkalimetallsalze werden im Allgemeinen in einer Menge von 50 ppm bis 1000 ppm bezogen auf die Menge des zu entkeimenden Getränkes eingesetzt, können aber auch in kleineren oder größeren Mengen eingesetzt werden. Bevorzugt liegt die Menge an eingesetzter Sorbinsäure und/oder deren Alkali- und/oder Erdalkalimetallsalze zwischen 100 ppm bis 350 ppm bezogen auf die Menge des zu entkeimenden Getränkes. Benzoesäure und/oder deren Alkali- und/oder Erdalkalimetallsalze werden im Allgemeinen in einer Menge von 50 ppm bis 1000 ppm bezogen auf die Menge des zu entkeimenden Getränkes eingesetzt, können aber auch in kleineren oder größeren Mengen eingesetzt werden. Bevorzugt liegt die Menge an eingesetzter Benzoesäure und/oder deren Alkali- und/oder Erdalkalimetallsalze zwischen 100 ppm bis 350 ppm bezogen auf die Menge des zu entkeimenden Getränkes. DMDC wird im Allgemeinen in einer Menge von 50 ppm bis 1000 ppm bezogen auf die Menge des zu entkeimenden Getränkes eingesetzt, kann aber auch in kleineren oder größeren Mengen eingesetzt werden. Bevorzugt liegt die Menge an eingesetztem DMDC zwischen 75 ppm bis 250 ppm bezogen auf die Menge des zu entkeimenden Getränkes.

Das Schwefeldioxid und/oder die Schwefeldioxid-freisetzende Substanzen werden im Allgemeinen in einer Menge von bis zu 500 ppm eingesetzt, können aber ebenfalls höher eingesetzt werden. Bevorzugt wird das Schwefeldioxid und/oder die Schwefeldioxid-freisetzende Substanzen in einer Menge von 5 ppm bis 100 ppm bezogen auf die Menge an zu behandelndem Getränk, eingesetzt. Noch weiter bevorzugt wird das Schwefeldioxid und/oder die Schwefeldioxid-freisetzende Substanzen in einer Menge von 5 ppm bis 20 ppm bezogen auf die Menge an zu behandelndem Getränk eingesetzt.

Ganz besonders bevorzugt wird eine Mischung aus Kaliumsorbat und/oder Natriumbenzoat und Dimethyldicarbonat und Kaliumdisulfit eingesetzt. Diese Mischung wirkt besonders synergistisch. Ganz besonders bevorzugt wird Kaliumsorbat und/oder Natriumbenzoat in einer Menge von 100 ppm bis 350 ppm und Dimethyldicarbonat in einer Menge von 100 ppm bis 250 ppm und Kaliumdisulfit in einer Menge von 5 ppm bis 100 ppm bezogen auf die Menge des zu entkeimenden Getränkes eingesetzt.

Unter Verunreinigung durch Essigsäurebakterien wird erfindungsgemäß verstanden, dass die aus dem Stand der Technik dem Fachmann bekannten Nachweismethoden einen signifikanten Nachweis von Essigsäurebakterien in den Getränken ergeben. Der gemäß dieser Methoden durchgeführte Nachweis eines Bakteriums stellt schon eine Verunreinigung im Sinne der Erfindung dar.

Da die erfindungsgemäße Verwendung ebenfalls die Einarbeitung der Verbindungen in die zu entkeimenden Getränke betrifft, ist von der Erfindung ebenfalls ein Verfahren zur Entkeimung von Getränken, die durch Essigsäurebakterien verunreinigt sind, bei dem,

a) Sorbinsäure oder Benzoesäure und/oder deren Alkali- und/oder Erdalkalimetallsalze und

b) Dimethyldicarbonat und

c) Schwefeldioxid und/oder Schwefeldioxid-freisetzende Substanzen

in die Getränke eingearbeitet werden.

Die Einarbeitung kann z.B. durch separate Zugabe der Verbindungen a), b) und c) in beliebiger Reihenfolge oder durch Zugabe dieser Verbindungen in einer Mischung erfolgen. Diese Mischung kann durch weitere Lösungsmittel oder auch durch andere Zusätze, wie z.B. Emulgatoren oder anderen geeigneten Lebensmittelzusatzstoffen verdünnt werden. Als Lösungsmittel können hydrophile, organische und mit Wasser mischbare Lösungsmittel eingesetzt werden. Bevorzugt wird kein zusätzliches Lösungsmittel hinzugegeben. Bevorzugt werden die Verbindungen getrennt in die Getränke eingearbeitet.

Nach der Entkeimung der Getränke findet vorzugsweise eine Konservierung durch die zugegebenen Konservierungsmittel statt.

Die erfindungsgemäß eingesetzte Mischung wirkt in synergistischer Weise gegen Essigsäurebakterien. Hierdurch können Getränke effizient und kostengünstig entkeimt und konserviert werden.

**Beispiele**

Eine Getränk wurde mit einer bestimmten Menge an einer Mikroorganismen-Mischung kontaminiert und eine Mischung aus Konservierungsmitteln wurde im Vergleich zu den Einzelsubstanzen auf Wirksamkeit hin untersucht. Bei der Keim-Mischung handelt es sich um *Asaia bogorensis, Asaia lannaensis, Gluconobacter oxydans sowie Gluconacetobacter liquefaciens.* Nach einer Woche wurde ein Anteil des Getränks auf das Vorhandensein von Mikroorganismen untersucht.

| | |
|---|---|
| Einzel-Testsubstanzen: | Kaliumsorbat, Dimethyldicarbonat, Natriumbenzoat, Kaliumdisulfit |
| Testkeim: | Mischung aus unterschiedlichen Essigsäurebakterien isoliert aus Getränkeabfüllstraßen |
| Substrat: | Eistee |
| Keimeinsaat pro mL Substrat: | 200 cfu/mL je Keim in der Mischung |

**Tabelle 1:**

| Wirkstoff-einzeln | MHK ppm nach einer Woche | |
|---|---|---|
| Kaliumsorbat | 750 mg/L | |
| Dimethyldicarbonat | 300 mg/L | |
| Kaliumdisulfit | 60 mg/L | |
| **Wirkstoff-Mischung** | **MHK ppm nach einer Woche** | **Synergistischer Index** |
| Kaliumsorbat Dimethyldicarbonat Kaliumdisulfit | 150 mg/L 150 mg/L 10 mg/L | SI=0,87 |
| **Wirkstoff-einzeln** | **MHK ppm nach einer Woche** | |
| Natriumbenzoat | 550 mg/L | |
| Dimethyldicarbonat | 300 mg/L | |
| Kaliumdisulfit | 60 mg/L | |
| **Wirkstoff-Mischung** | **MHK ppm nach einer Woche** | **Synergistischer Index** |
| Natriumbenzoat Dimethyldicarbonat Kaliumdisulfit | 125 mg/L 175 mg/L 7,5 mg/L | SI=0,92 |

Nach der von Kull et al. (F.C. Kull, P.C. Eismann, H.D. Sylvestrowicz, R.L. Mayer, Applied Microbiology 9, 538 bis 541, 1961) beschriebenen Methode wurde der Synergismus ermittelt. Dabei gelten folgende Beziehungen:

$$QA/Qa + QB/Qb + QC/Qc = SI$$

Qa = Konzentration von Substanz A, welche die MHK darstellt

Qb= Konzentration von Substanz B, welche die MHK darstellt

Qc=Konzentration von Substanz C, welche die MHK darstellt

QA= Konzentration von Substanz A in der Konzentration von A/B/C, die das Mikrobenwachstum unterbindet

QB = Konzentration von Substanz B in der Konzentration von A/B/C, die das Mikrobenwachstum unterbindet

QC=Konzentration von Substanz C in der Konzentration von A/B/C, die das Mikrobenwachstum unterbindet

SI = Synergistischer Index

SI = 1 bedeutet Additivität

SI >1 bedeutet Antagonismus

SI<1 bedeutet Synergismus

**Patentansprüche**

1.  Verwendung von synergistisch wirkenden Mischungen enthaltend

    a) Sorbinsäure oder Benzoesäure und/oder deren Alkali- und/oder Erdalkalimetallsalze und
    b) Dimethyldicarbonat und
    c) Schwefeldioxid und/oder Schwefeldioxid-freisetzende Substanzen

    zur Entkeimung von Getränken, die durch Essigsäurebakterien verunreinigt sind, vorzugsweise zu deren anschließenden Konservierung.

2.  Verwendung gemäß Anspruch 1, **dadurch gekennzeichnet, dass** als Alkali- und oder Erdalkalimetallsalz der Sorbinsäure Natriumsorbat, Kaliumsorbat und Lithiumsorbat oder Calciumsorbat oder Mischungen dieser Salze eingesetzt werden.

3.  Verwendung gemäß Anspruch 1, **dadurch gekennzeichnet, dass** als Alkali- und oder Erdalkalimetallsalz der Benzoesäure Natriumbenzoat, Kaliumbenzoat und Lithiumbenzoat oder Calciumbenzoat oder Mischungen dieser Salze eingesetzt werden.

4.  Verwendung gemäß Anspruch 1, **dadurch gekennzeichnet, dass** als Schwefeldioxid-freisetzende Substanzen Natriumhydrogensulfit, Natriumdisulfit, Kaliumhydrogensulfit, Kaliumdisulfit, Calciumhydrogensulfit, Calciumdisulfit oder Mischungen dieser Salze eingesetzt werden.

5.  Verwendung gemäß Anspruch 1, **dadurch gekennzeichnet, dass** in Anspruch 1 eine Mischung enthaltend Kaliumsorbat und/oder Natriumbenzoat, Dimethyldicarbonat und Kaliumdisulfit zur Entkeimung von Getränken, die durch Essigsäurebakterien verunreinigt sind und deren anschließenden Konservierung, eingesetzt werden.

6.  Verwendung gemäß einem oder mehreren der Ansprüche 1 bis 5, **dadurch gekennzeichnet, dass** die Sorbinsäure und/oder deren Alkali- und/oder Erdalkalimetallsalze in einer Menge von 100 ppm bis 350 ppm oder die Benzoesäure und/oder deren Alkali- und/oder Erdalkalimetallsalze in einer Menge von 100 ppm bis 350 ppm eingesetzt werden und das DMDC in einer Menge von 75 ppm und 250 ppm eingesetzt wird und das Schwefeldioxid und/oder die Schwefeldioxid-freisetzende Substanzen in einer Menge von 5 ppm bis 100 ppm bezogen auf die Menge an zu behandelndem Getränk, eingesetzt werden.

7.  Verwendung gemäß einem oder mehreren der Ansprüche 1 bis 6, **dadurch gekennzeichnet, dass** als Getränke Erfrischungsgetränke, wie insbesondere Eistees, Sportdrinks, Fruchtsäfte und fruchtsafthaltige Getränke behandelt werden.

8.  Verwendung gemäß einem oder mehreren der Ansprüche 1 bis 7, **dadurch gekennzeichnet, dass** die Wirkung der Mischung gegen Essigsäurebakterien ausgewählt aus der folgende Gruppe Asaia sp., Acetobacter sp. Gluconobacter sp., Gluconacetobacter sp., Saccharibacter sp., Swaminanthia sp., Acidomonas sp., Kozakia sp., Neoasaia sp., Granulibacter sp., Acidocella sp., Acidiphilium sp., Roseococcus sp., Acidosphaera sp., Rhodopila sp. erfolgt.

9.  Verfahren zur Entkeimung von Getränken, die durch Essigsäurebakterien verunreinigt sind, **dadurch gekennzeichnet, dass**

    a) Sorbinsäure oder Benzoesäure und/oder deren Alkali- und/oder Erdalkalimetallsalze und

b) Dimethyldicarbonat und

c) Schwefeldioxid und/oder Schwefeldioxid-freisetzende Substanzen in die Getränke eingearbeitet werden.

10. Verfahren gemäß Anspruch 9, **dadurch gekennzeichnet, dass** nach der Entkeimung der Getränke eine Konservierung der Getränke durch die zugegebenen Konservierungsmittel stattfindet.

**Claims**

1. Use of synergistically acting mixtures comprising

   a) sorbic acid or benzoic acid and/or alkali metal salts and/or alkaline earth metal salts thereof and
   b) dimethyl dicarbonate and
   c) sulphur dioxide and/or sulphur dioxide-releasing substances

   for sterilizing drinks which have been contaminated by acetic acid bacteria, preferably for the subsequent preservation thereof.

2. Use according to Claim 1, **characterized in that** the alkali metal and/or alkaline earth metal salt of sorbic acid used are sodium sorbate, potassium sorbate and lithium sorbate or calcium sorbate or mixtures of said salts.

3. Use according to Claim 1, **characterized in that** the alkali metal and/or alkaline earth metal salt of benzoic acid used are sodium benzoate, potassium benzoate and lithium benzoate or calcium benzoate or mixtures of said salts.

4. Use according to Claim 1, **characterized in that** the sulphur dioxide-releasing substances used are sodium hydrogen sulphite, sodium disulphite, potassium hydrogen sulphite, potassium disulphite, calcium hydrogen sulphite, calcium disulphite or mixtures of said salts.

5. Use according to Claim 1, **characterized in that** in Claim 1 a mixture comprising potassium sorbate and/or sodium benzoate, dimethyl carbonate and potassium disulphite are used for sterilizing drinks which have been contaminated by acetic acid bacteria and the subsequent preservation thereof.

6. Use according to one or more of Claims 1 to 5, **characterized in that** the sorbic acid and/or alkali metal and/or alkaline earth metal salts thereof are used in an amount of 100 ppm to 350 ppm or the benzoic acid and/or alkali metal and/or alkaline earth metal salts thereof are used in an amount of 100 ppm to 350 ppm and the DMDC is used in an amount of 75 ppm and 250 ppm and the sulphur dioxide and/or the sulphur dioxide-releasing substances are used in an amount of 5 ppm to 100 ppm, based on the amount of drink to be treated.

7. Use according to one or more of Claims 1 to 6, **characterized in that** the drinks treated are refreshing drinks, such as in particular iced teas, sports drinks, fruit juices and fruit juice-containing drinks.

8. Use according to one or more of Claims 1 to 7, **characterized in that** the mixture has an effect on acetic acid bacteria selected from the following group of Asaia sp., Acetobacter sp. Gluconobacter sp., Gluconacetobacter sp., Saccharibacter sp., Swaminanthia sp., Acidomonas sp., Kozakia sp., Neoasaia sp., Granulibacter sp., Acidocella sp., Acidiphilium sp., Roseococcus sp., Acidosphaera sp. and Rhodopila sp.

9. Method for sterilizing drinks which have been contaminated by acetic acid bacteria, **characterized in that**

   a) sorbic acid or benzoic acid and/or alkali metal salts and/or alkaline earth metal salts thereof and
   b) dimethyl dicarbonate and
   c) sulphur dioxide and/or sulphur dioxide-releasing substances are incorporated into the drinks.

10. Method according to Claim 9, **characterized in that** preservation of the drinks by the preservatives added occurs after the sterilization of the drinks.

**Revendications**

1. Utilisation de mélanges à action synergique, contenant

   a) de l'acide sorbique ou de l'acide benzoïque et/ou leurs sels de métal alcalin et/ou de métal alcalino-terreux et
   b) du dicarbonate de diméthyle et
   c) du dioxyde de soufre et/ou des substances libérant du dioxyde de soufre pour stériliser des boissons qui sont contaminées par des bactéries acétiques, de préférence pour leur conservation consécutive.

2. Utilisation selon la revendication 1, **caractérisée en ce qu'**on utilise, comme sel de métal alcalin et/ou de métal alcalino-terreux de l'acide sorbique, le sorbate de sodium, le sorbate de potassium et le sorbate de lithium ou le sorbate de calcium ou des mélanges de ces sels.

3. Utilisation selon la revendication 1, **caractérisée en ce qu'**on utilise, comme sel de métal alcalin et/ou de métal alcalino-terreux de l'acide benzoïque, le benzoate de sodium, le benzoate de potassium et le benzoate de lithium ou le benzoate de calcium ou des mélanges de ces sels.

4. Utilisation selon la revendication 1, **caractérisée en ce qu'**on utilise, comme substances libérant du dioxyde de soufre, l'hydrogénosulfite de sodium, le bisulfite de sodium, l'hydrogénosulfite de potassium, le bisulfite de potassium, l'hydrogénosulfite de calcium, le bisulfite de calcium ou des mélanges de ces sels.

5. Utilisation selon la revendication 1, **caractérisée en ce qu'**on utilise, dans la revendication 1, un mélange contenant du sorbate de potassium et/ou du benzoate de sodium, du dicarbonate de diméthyle et du bisulfite de potassium pour stériliser des boissons qui sont contaminées par des bactéries acétiques et pour leur conservation ultérieure.

6. Utilisation selon l'une ou plusieurs des revendications 1 à 5, **caractérisée en ce que** l'acide sorbique et/ou ses sels de métal alcalin et/ou de métal alcalino-terreux sont utilisés en une quantité de 100 ppm à 350 ppm ou l'acide benzoïque et/ou ses sels de métal alcalin et/ou de métal alcalino-terreux sont utilisés en une quantité de 100 ppm à 350 ppm et le DMDC est utilisé en une quantité de 75 ppm et 250 ppm et le dioxyde de soufre et/ou les substances libérant du dioxyde de soufre sont utilisés en une quantité de 5 ppm à 100 ppm, par rapport à la quantité de boisson à traiter.

7. Utilisation selon l'une ou plusieurs des revendications 1 à 6, **caractérisée en ce qu'**on traite, comme boissons, des boissons rafraîchissantes, telles qu'en particulier le thé glacé, des boissons sportives, des jus de fruits et des boissons contenant des jus de fruits.

8. Utilisation selon l'une ou plusieurs des revendications 1 à 7, **caractérisée en ce que** l'action du mélange a lieu contre des bactéries acétiques choisies dans le groupe suivant Asaia sp., Acetobacter sp. Gluconobacter sp., Gluconacetobacter sp., Saccharibacter sp., Swaminanthia sp., Acidomonas sp., Kozakia sp., Neoasaia sp., Granulibacter sp., Acidocella sp., Acidiphilium sp., Roseococcus sp., Acidosphaera sp., Rhodopila sp.

9. Procédé pour stériliser des boissons qui sont contaminées par des bactéries acétiques, **caractérisé en ce que**

   a) de l'acide sorbique ou de l'acide benzoïque et/ou leurs sels de métal alcalin et/ou de métal alcalino-terreux et
   b) du dicarbonate de diméthyle et
   c) du dioxyde de soufre et/ou des substances libérant du dioxyde de soufre sont incorporés dans les boissons.

10. Procédé selon la revendication 9, **caractérisé en ce qu'**après la stérilisation des boissons, une conservation des boissons par les conservateurs ajoutés a lieu.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9609774 A

**In der Beschreibung aufgeführte Nicht-Patentliteratur**

- **YAMADA, Y. ; YUKPHAN, P.** Genera and species in acetic acid bacteria. *International Journal of Food Microbiology,* 2008, vol. 125, 15-24
- **HORSAKOVA, I. et al.** Asaia sp. as a bacterium decaying the packaged still fruit beverages. *Czech. Journal of Food Science,* 2009, vol. 27, 362-365
- **WATANABE, M.L. ; INO S.** Studies on bacteria isolated from Japanese wine. Part 2. Growth of the Acetobacter sp. A-1 during the fermentation and storage of grape must and red wine. *Yamanashi-ken Shokuhin Kogyo Shidosho Kenkyu Hokoku,* 1984, vol. 16, 13
- **JUVEN, B.J. ; SHOMEN, I.** Spoilage of soft drinks caused by bacterial flocculation. *Journal of Food Protection,* 1985, vol. 48, 52
- **F.C. KULL ; P.C. EISMANN ; H.D. SYLVESTROWICZ ; R.L. MAYER.** *Applied Microbiology,* 1961, vol. 9, 538-541